# FASCICULE DE BREVET EUROPEEN

(11) **EP 0 878 994 B1**
(45) Date de publication et mention de la délivrance du brevet: **04.07.2001**
(21) Numéro de dépôt: 97902429.6
(22) Date de dépôt: 03.02.1997
(51) Int. Cl.: A01D 46/28

(54) **DISPOSITIF EMBARQUE DE LAVAGE ET DE TRAITEMENT, NOTAMMENT POUR MACHINE A VENDANGER**
BORDSEITIGE REINIGUNGS- UND BEHANDLUNGSVORRICHTUNG, INSBESONDERE FÜR EINE TRAUBENERNTEMASCHINE
ON-BOARD WASHING AND TREATMENT DEVICE, PARTICULARLY FOR A VINTAGE MACHINE

(30) Priorité: 06.02.1996 FR 9601703
(43) Date de publication de la demande: 25.11.1998
(73) Titulaire: New Holland Braud S.A., 85220 Coex (FR)
(72) Inventeur: ORLIAC, Jacques, F-33270 Bouliac (FR)
(74) Mandataire: Vandenbroucke, Alberic
(86) Numéro de dépôt international: FR9700205
(87) Numéro de publication internationale: WO9728679

(56) Documents cités:
- FR-A- 2 151 642
- PATENT ABSTRACTS OF JAPAN vol. 10, no. 125 (E-402) & JP 60 257140 A (MATSUSHITA DENKI SANGYO)
- PATENT ABSTRACTS OF JAPAN vol. 95, no. 5 & JP 07 042134 A (MAEDA)
- PATENT ABSTRACTS OF JAPAN vol. 15, no. 31 (C-798) & JP 02 268881 A (NIPPON ALUM MFG)

## Description

La présente invention a pour objet une machine agricole, en particulier une machine à vendanger, du type comprenant un chassis motorisé sur roues, une tête de récolte et un dispositif de lavage embarqué.

Si l'on prend l'exemple des machines à vendanger de type connu, elles comprennent un châssis avec une motorisation, un circuit hydraulique et des roues sur trains enjambeurs ainsi qu'un poste de pilotage et une tête de récolte qui comprend les moyens de secouage visant à faire tomber les grains, des moyens de récupération et de transfert de ces grains, des moyens de stockage de ce grains transférés. Les publications FR-B-2 151 642 et FR-A-2 605 487 décrivent des machines de ce type.

Ces machines agricoles sont particulières en ce sens qu'il s'agit de machines prévues pour circuler sur des terrains certaines fois boueux ou poussiéreux, qui récoltent des grains de raisin destinés à fermenter dont on souhaite la plus grande propreté au moment de la récolte et dont les conditions de travail génèrent des corps étrangers à la vendange, souvent de petites dimensions.

En effet, le secouage ou le battage provoque la chute simultanée de feuilles et autres morceaux de sarments. Ces morceaux sont pour l'essentiel aspirés par les ventilateurs/broyeurs qui les réduisent à l'état de débris et rejetés.

Or, la vendange avec les machines à vendanger provoque l'éclatement de grains de raisin, ce qui macule de sucre sur une grande partie de la machine et surtout la tête de récolte.

Les débris rejetés et tous les autres corps étrangers projetés ont tendance à être retenus par cette pellicule de sucre qui agit comme une colle.

Le châssis lui-même, comme celui de toutes les machines agricoles est bien souvent le lieu de rétention de grosses quantités de boue.

Les utilisateurs se trouvent dans l'obligation de nettoyer la machine une, voire deux fois par jour ou plus si la machine travaille jour et nuit.

Cette obligation résulte aussi du fait qu'il est quasiment impossible d'intervenir mécaniquement sur la machine si celle-ci colle sur toute sa surface, ne serait ce que pour vérifier le bon état des organes. L'accumulation de plusieurs couches de sucre, surtout si la machine a des périodes d'interruption, peut provoquer le dysfonctionnement de certains éléments, une usure prématurée de certaines parties mobiles délicates.

Organoleptiquement et sanitairement parlant, il paraît difficile de laisser certaines accumulations de raisins pourrissant en des recoins du circuit de la vendange dans la machine à vendanger.

De façon générale, l'entretien et le nettoyage de telles machines sophistiquées s'avèrent nécessaire, car certaines parties mobiles dans la tête de récolte sont en effet délicates et travaillent à des fréquences assez élevées.

Le sucre ne doit pas entraver le fonctionnement de certains organes comme les moyens de secouage ou de battage qui sont nécessairement articulés, ou comme les convoyeurs qui comportent des chaînes, des tapis convoyeurs, des écailles ou godets articulés, ou encore comme les carters, les voiles en plastique de protection.

On sait aussi que, dans l'agriculture et plus particulièrement dans le domaine viticole, il existe des entrepreneurs qui possèdent un parc machine, notamment des machines à vendanger, et dont le métier consiste à proposer comme prestation la vendange d'une propriété à l'aide de telles machines.

Un tel prestataire ne peut pas se présenter auprès d'un nouveau client avec une machine couverte de sucre et de débris de la précédente prestation.

Ceci conduit donc aussi à des lavages réguliers.

On se heurte alors à plusieurs problèmes détaillés, ci-après sans respecter nécessairement un classement par degré d'importance.

Le premier est dû au fait que la machine comprend des recoins difficiles d'accès, qui obligent l'opérateur à monter sur la machine et à la parcourir.

Un autre phénomène résulte du fait que de nombreux points fragiles, comprenant des joints et autres soufflets ou bavettes interdisent l'emploi de nettoyeurs à haute pression à 100 bars et plus.

Qui plus est, ce type de nettoyeur a plutôt tendance à déplacer la saleté car si la puissance mécanique permet sans nul doute le décollage des particules et débris et la remise en solution du sucre, le volume d'eau projeté est très faible et n'assure pas un nettoyage global suffisant.

Ces opérations de nettoyage posent aussi la contrainte du temps car ces machines doivent être rentabilisées sur des périodes très courtes et les durées de fonctionnement doivent être aussi longues que possible, en limitant les arrêts pour l'entretien. Il est assez incongru de perdre du temps pour du lavage.

On sait, par ailleurs, que le graissage des articulations et d'autres parties tournantes ou mobiles est généralement assuré par une centrale embarquée, avec un déclenchement séquentiel entièrement automatisé, qui injecte au droit des points à graisser une quantité donnée de matière lubrifiante. Ce mode de lubrification automatique est de plus en plus monté sur ces machines.

D'autres contraintes sont aussi à prendre en considération comme la présence de prises de courant et d'eau simultanément sur une zone potentielle de lavage, ou la pression et le débit d'alimentation du point d'eau qui peuvent varier d'un lieu à l'autre.

Il faut actuellement entre 3 et 5 m³ d'eau lorsqu'un opérateur souhaite nettoyer une machine à vendanger, pour donner un ordre d'idée.

Le temps nécessaire est aisément déduit du débit de sortie du moyen de lavage et de la quantité d'eau précitée de plusieurs m³.

Même à des débits de 100 litres par minute, on arrive vite à des durées de plusieurs dizaines de minutes.

Aussi, la présente invention consiste à proposer un circuit embarqué sur la machine, entièrement autonome, nécessitant uniquement une bâche contenant le volume d'eau nécessaire ou un poste d'alimentation à gros débit, c'est-à-dire une petite section et une forte pression ou une forte section et une faible pression ou encore une forte section et une forte pression.

Ce circuit permet un nettoyage très rapide en préservant les éléments fragiles et en assurant une action sur certains points précis.

Le fonctionnement peut-être entièrement automatisé et programmé avec des durées de cycle très courtes.

Le circuit peut-être coordonné dans ses actions avec les cycles de graissage.

On entend pour la suite de la description, par "rinçage" les différentes phases de prélavage, lavage et rinçage final proprement dit.

A cet effet, l'invention concerne une machine agricole comprenant les caractéristiques de la revendication 1.

Plus particulièrement, les buses de rinçage sont situées en partie haute de la machine et comprennent des moyens brise-jet interposés sur le jet de sortie en sorte de provoquer une aspersion et en ce que la canalisation sur laquelle sont piquées lesdites buses de rinçage est à gros débit.

Les buses de décollage sont quant à elles orientées vers des points difficilement accessibles de la machine et sujets à accumulation, quelle que soit la hauteur de la machine à laquelle elles sont positionnées, la canalisation sur laquelle sont piquées lesdites buses de décollage étant à petit débit.

Selon une autre caractéristique, les moyens d'alimentation en eau comprennent une pompe à gros débit, embarquée et des moyens de raccordement à un point d'eau et de plus, en option, un flexible équipé d'une crépine en sorte de pouvoir pomper de l'eau directement d'une bâche.

Il est de plus prévu un circuit annexe pour le lavage du châssis

Le dispositif est équipé, dans ce mode de réalisation sophistiqué, d'un programmateur de commande des différents cycles et des différents circuits, pour faciliter le travail de l'opérateur.

Selon un perfectionnement, le dispositif comprend des moyens d'injection de produits de traitement, notamment des produits bactéricides et/ou fongicides, dans l'eau d'alimentation.

Sur les dessins annexés, on a représenté sur les différentes figures un mode de réalisation particulier et préférentiel, non limitatif.
- la figure 1 représente une vue schématique en perspective d'une machine à vendanger,
- la figure 2 représente un circuit type pouvant être embarqué, et
- la figure 3 représente une vue d'un mode de réalisation d'une buse d'aspersion telle qu'utilisée.

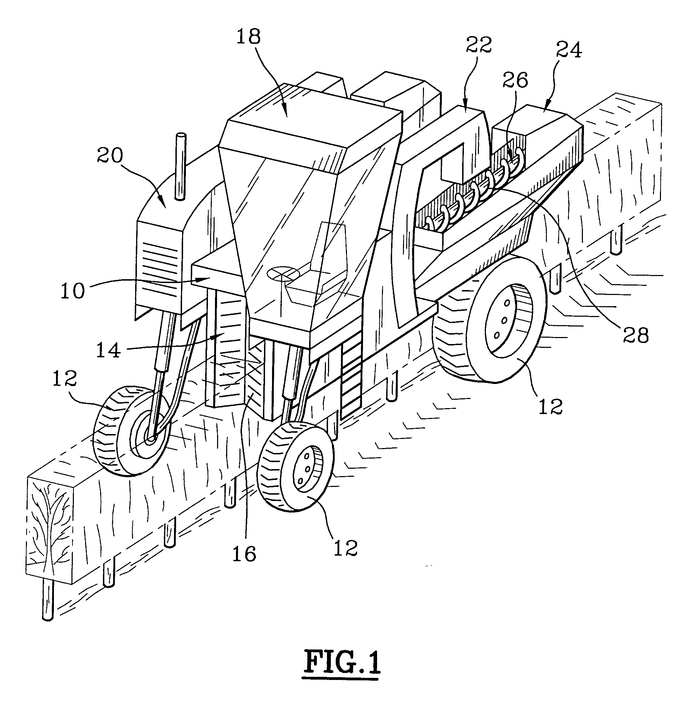

Sur la figure 1, on a représenté une machine à vendanger comprenant un châssis 10 monté sur roues 12, toutes motrices grâce à des moteurs hydrauliques généralement, et une tête de récolte 14 dont on peut voir les moyens de secouage ou de battage 16.

Cette machine comprend, outre une cabine de conduite 18 optionnelle, un moteur avec son circuit hydraulique associé 20, des moyens de transfert 22, ainsi que des moyens de stockage temporaire 24 des grains de raisin, équipés de moyens de répartition 26 dans ces moyens de stockage, en l'occurrence une vis d'Archimède 28.

Le but est de nettoyer une telle machine et surtout l'ensemble des éléments en contact avec le raisin.

Il faut remettre en solution le sucre, décoller la pulpe et les débris, et évacuer toutes ces impuretés.

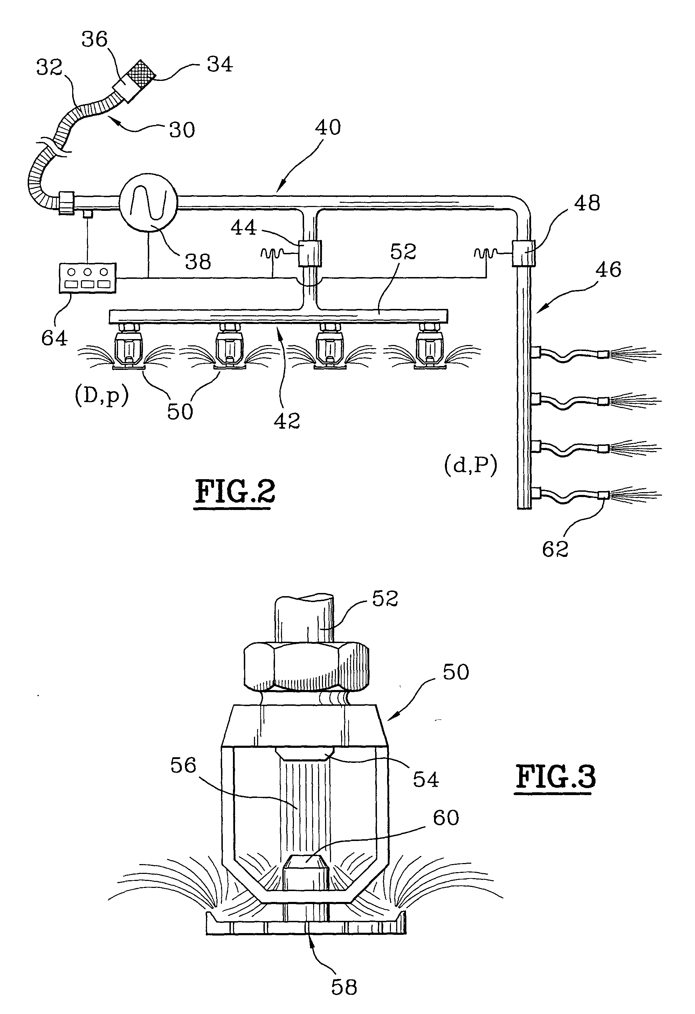

Tout d'abord, comme indiqué sur la figure 2, le dispositif selon l'invention comprend un flexible 32 muni à son extrémité d'une crépine 34. Ce flexible comporte aussi un raccord 36 susceptible d'être connecté à une prise d'eau sous pression du réseau.

Une pompe 38 permet d'injecter de l'eau avec une pression donnée dans le circuit 40 du dispositif de lavage selon l'invention.

Ce circuit 40 comprend un premier circuit 42 de rinçage dont l'ouverture est commandée par une vanne 44 en l'occurrence une électrovanne et un second circuit 46 de décollage des débris dont l'ouverture est commandée par une vanne 48, également une électrovanne dans ce mode de réalisation.

Le premier circuit 42 de rinçage comprend des buses d'aspersion 50 connectées sur une canalisation 52 de diamètre suffisant pour conférer un gros débit. Ces buses sont disposées en partie haute de la tête de récolte en sorte que les écoulements et les aspersions couvrent toute les surfaces intérieures et extérieures.

Par contre, ces buses 50 ont des caractéristiques particulières et un mode de réalisation est représenté sur la figure 3.

Une telle buse a un orifice de forte section 54 et génère un jet 56 de gros débit, à la pression du circuit 42, donc à la pression de la pompe 38. Ce jet 56 est cassé par un brise-jet 58, en l'occurrence un cône 60 et un disque de répartition, si bien que le débit est important avec une pression d'adduction importante mais uniquement avec une pression gravitaire lors de l'impact sur les éléments de la machine.

Le second circuit 46 comprend des buses 62 de décollage prévues pour être disposées au droit des endroits difficilement accessibles ou au droit des lieux préférentiels d'accumulation.

Le jet de ces buses 62 de décollage a un impact beaucoup plus ciblé. Ces buses de décollage peuvent être réparties sur toute la hauteur de la machine.

En effet, leur rôle est uniquement de décoller et de nettoyer une zone localisée puis de les déplacer vers un endroit plus accessible mais c'est l'eau du circuit primaire à gros débit qui entraîne les débris ainsi décollés du haut de la machine vers le bas, évitant toute nouvelle salissure.

Les séquences de lavage peuvent être programmées grâce à un programmateur 64 qui commande les électrovannes, la mise en service de la pompe.

Un tel programmateur peut aussi être relié au système de graissage automatique lorsqu'il y en a un en sorte de déclencher une séquence de graissage spécifique après le lavage et avant remise en service.

On comprend ainsi qu'avec une forte pression et un gros débit dans la canalisation des premier et second circuits, l'opération de lavage dure peu de temps car le gros volume d'eau de plusieurs m³ est rapidement consommé et judicieusement réparti sans provoquer de quelconques dégradations.

On peut aussi prévoir un circuit annexe non représenté mais du type de celui proposé sur la figure 2, ce circuit ayant pour objet le lavage des organes annexes, roues, châssis, vitres, moteur.

Un tel circuit n'est mis en service que de façon optionnelle lorsque les conditions de travail le rende nécessaire, boue, poussière par exemple.

Un tel circuit comprendra également deux circuits, un premier de rinçage et un second de décollage.

On peut ainsi réduire la quantité d'eau consommée si seule la tête de récolte est à nettoyer sans que l'extérieur soit particulièrement sale.

La pompe est avantageusement entraînée mécaniquement à partir du moteur ou par l'hydraulique de la machine si bien que celle-ci est parfaitement autonome.

Un autre avantage non négligeable du dispositif selon l'invention est celui de pouvoir injecter dans le circuit un agent de traitement liquide, fongicide ou bactéricide durant un lavage donné, les contraintes normatives d'hygiène devenant de plus en plus draconiennes.

Comme le circuit est embarqué, il suffit de prévoir un piquage avec une prise Venturi calibrée qui permet de doser et d'aspirer la quantité voulue de produit en fonction du débit d'eau.

L'installation des différentes buses tant en nombre qu'en positionnement dépend des modèles de machines et de leurs agencements spécifiques, le tracé du circuit étant à la portée de l'homme de l'art.

## Revendications

1. Machine agricole, en particulier une machine à vendanger, du type comprenant un châssis (10) motorisé sur roues (12) et une tête de récolte (14), caractérisée en ce qu'il comprend un dispositif de lavage embarqué, notamment pour l'élimination du sucre et de la pulpe accumulés sur ladite machine, le dispositif comprenant des moyens d'alimentation en eau (30, 38), au moins un premier (42) et un second circuits (46), le premier circuit dit de rinçage comprenant une canalisation (52) avec des buses d'aspersion (50) à faible pression de sortie et gros débit et le second circuit dit de décollage comprenant une canalisation avec des buses (62) de décollage à plus faible débit et plus forte pression que les buses de rinçage.

2. Machine agricole selon la revendication 1, caractérisée en ce que les buses de rinçage (50) sont situées en partie haute de la machine et comprennent des moyens brise-jet (58) interposés sur le jet (56) de sortie en sorte de provoquer une aspersion et en ce que la canalisation (52) sur laquelle sont piquées lesdites buses de rinçage est à gros débit.

3. Machine agricole selon la revendication 1 ou 2, caractérisée en ce que les buses (62) de décollage sont orientées vers des points difficilement accessibles de la machine et sujets à accumulation, quelle que soit la hauteur à laquelle se situent ces points, la canalisation sur laquelle sont piquées lesdites buses (62) de décollage étant à petit debit.

4. Machine agricole selon l'une quelconque des revendications précédentes, caractérisée en ce que les moyens d'alimentation en eau comprennent une pompe (38) à gros débit, embarquée et des moyens de raccordement (32, 34 et 36) à un point d'eau.

5. Machine agricole selon la revendication 4, caractérisée en ce que les moyens d'alimentation en eau comprennent de plus un flexible (32) équipé d'une crépine (34) en sorte de pouvoir pomper de l'eau directement d'une bâche.

6. Machine agricole selon selon l'une quelconque des revendications précédentes, caractérisée en ce que le dispositif de lavage comprend un circuit annexe pour le lavage du châssis.

7. Machine agricole selon selon l'une quelconque des revendications précédentes, caractérisée en ce que le dispositif de lavage comprend un programmateur (64) de commande des différents cycles et des différent circuits.

8. Machine agricole selon selon l'une quelconque des revendications précédentes, caractérisée en ce que le dispositif de lavage comprend des moyens d'injection de produits de traitement, notamment des produits bactéricides et/ou fongicides, dans l'eau d'alimentation.

## Patentansprüche

1. Landwirtschaftliche Maschine, insbesondere Traubenerntemaschine von der Art, die ein motorgetriebenes Fahrgestell (10) auf Rädern (12) und einen Erntekopf (14) aufweist, dadurch gekennzeichnet, daß sie eine bordseitige Reinigungsvorrichtung insbesondere zur Beseitigung von Zucker und der Pulpe aufweist, der bzw. die sich auf der Maschine ansammelt, wobei die Vorrichtung Wasserzufuhreinrichtungen (30, 38), zumindest einen ersten (42) und einen zweiten Kreis (46) umfaßt, wobei der erste einen Spülkreis bildende Kreis eine Rohrleitung (52) mit Sprühdüsen (50) mit geringem Ausgangsdruck und großer Durchsatzmenge umfaßt, während der zweite Kreis, der ein Ablösekreis ist, eine Rohrleitung mit Ablösedüsen (62) mit wesentlich geringerer Durchsatzmenge und wesentlich größerem Druck als die Spüldüsen umfaßt.

2. Landwirtschaftliche Maschine nach Anspruch 1, dadurch gekennzeichnet, daß die Spüldüsen (50) im oberen Teil der Maschine angeordnet sind und Strahlaufbrecheinrichtungen (58) aufweisen, die in den Austrittsstrahl (56) derart eingesetzt sind, daß eine Besprühung hervorgerufen wird, und daß die Rohrleitung (52), von der die Spüldüsen abzweigen, eine große Durchsatzmenge aufweist.

3. Landwirtschaftliche Maschine nach Anspruch 1 oder 2, dadurch gekennzeichnet, daß die Ablösedüsen (62) auf schwierig zugängliche und der Ansammlung unterworfene Punkte der Maschine unabhängig von der Höhe gerichtet sind, an der sich diese Punkte befinden, wobei die Rohrleitung, von der die Ablösedüsen (62) abzweigen, eine kleine Durchsatzmenge aufweist.

4. Landwirtschaftliche Maschine nach einem der vorhergehenden Ansprüche, dadurch gekennzeichnet, daß die Wasserspeiseeinrichtungen eine Pumpe (38) mit großer Durchsatzmenge, die bordseitig angeordnet ist, und Verbindungseinrichtungen (32, 34 und 36) mit einer Wasserversorgungsstelle umfassen.

5. Landwirtschaftliche Maschine nach Anspruch 4, dadurch gekennzeichnet, daß die Wasserspeiseeinrichtungen weiterhin einen flexiblen Schlauch (32) aufweisen, der mit einem Pumpenkorb (24) derart versehen ist, daß das Wasser direkt aus einem Vorratsbehälter gepumpt werden kann.

6. Landwirtschaftliche Maschine nach einem der vorhergehenden Ansprüche, dadurch gekennzeichnet, daß die Reinigungsvorrichtung einen Zusatzkreis für die Reinigung des Fahrgestells aufweist.

7. Landwirtschaftliche Maschine nach einem der vorhergehenden Ansprüche, dadurch gekennzeichnet, daß die Reinigungsvorrichtung eine Programmiereinrichtung (34) zur Steuerung der unterschiedlichen Zyklen und der verschiedenen Kreise aufweist.

8. Landwirtschaftliche Maschine nach einem der vorhergehenden Ansprüche, dadurch gekennzeichnet, daß die Reinigungsvorrichtung Einrichtungen zur Injektion von Behandlungsprodukten, insbesondere von bakteriziden und/oder fungiziden Produkten in das Speisewasser aufweist.

## Claims

1. An agricultural machine, in particular a grape harvesting machine, of the type including a motorized chassis (10) on wheels (12) and a harvesting head (14), characterized in that it includes an onboard washing system, in particular for eliminating sugar and pulp that have accumulated on said machine, the system including water feed means (30, 38), at least one first circuit (42) and one second circuit (46), the first circuit being referred to as a rinsing circuit and including a pipe (52) with low outlet pressure high flowrate sprinkler nozzles (50) and the second circuit being referred to as a dislodging circuit and including a pipe with dislodging nozzles (62) adapted to operate at a lower flowrate and a higher pressure than the rinsing nozzles.

2. An agricultural machine according to claim 1, characterized in that the rinsing nozzles (50) are in an upper part of the machine and include means (58) disposed in the outlet jet (56) to break up the jet to produce a sprinkling effect and in that the pipe (52) to which said rinsing nozzles is connected is a high flowrate pipe.

3. An agricultural machine according to claim 1 or claim 2, characterized in that the dislodging nozzles (62) are oriented towards points of the machine to which access is difficult and which are subject to accumulation, regardless of the height of said points, the pipe to which said dislodging nozzles (62) are connected being a low flowrate pipe.

4. An agricultural machine according to any of the preceding claims, characterized in that the water feed means include an onboard high flowrate pump (38) and means (32, 34 and 36) for connecting it to a water supply point.

5. An agricultural machine according to claim 4, characterized in that the water feed means further include a hose (32) fitted with a strainer (34) to enable water to be pumped directly from a tank.

6. An agricultural machine according to any of the preceding claims, characterized in that the washing system includes an ancillary circuit for washing the chassis.

7. An agricultural machine according to any of the preceding claims, characterized in that the washing system includes a programmer (64) for controlling the various cycles and circuits.

8. An agricultural machine according to any of the preceding claims, characterized in that the washing system includes means for injecting treatment products, in particular bactericides and/or fungicides, into the feed water.
